# EUROPEAN PATENT APPLICATION

(11) **EP 1 862 973 A1**
(43) Date of publication of application: **05.12.2007**
(21) Application number: 06712091.5
(22) Date of filing: 20.01.2006
(51) Int. Cl.: G06T 15/00, A63F 13/00

(54) **IMAGE GENERATION DEVICE, AUTOMATIC GENERATION METHOD, RECORDING MEDIUM, AND PROGRAM**

(30) Priority: 25.01.2005 JP 2005017223
(71) Applicant: Konami Digital Entertainment Co., Ltd., Minato-ku Tokyo 107-8324 (JP)
(72) Inventor: NAGAYAMA, Kentaro, c/o Konami Digital Enternainment Co., Ltd., Tokyo 107-8324 (JP)
(74) Representative: Rüger, Barthelt & Abel Patentanwälte
(86) International application number: PCT/JP2006/300866
(87) International publication number: WO 2006/080255

(57) **Abstract**

A parts selection unit (203) reads out outline information stored in an outline information storage unit (212) and selects a parts image in alignment with stored outline information. Then the parts selection unit (203) selects remaining parts so that the total work load is within a range not exceeding a predetermined allowable value, based on stored indicator information. That is, with the processing loads of successively selected parts image being calculated in the processing load calculation unit (204), a remaining parts image is selected. Image rendering unit (206) generates a three-dimensional image based on each parts image selected by the parts selection unit (203) and stored in a map storage unit (205).

## Description

### Technical Field

The present invention relates to an image generation device, automatic generation method, recording medium and program which are suitable for automatically generating a proper three-dimensional image.

### Background Art

Conventionally, various games (software or the like) which are executed by a video game device or the like have been developed. Of the games, generally called role playing games are incorrigibly popular and supported by players of a wide range of age groups.
This role playing game is of a type in which a main character (local character) achieves a final goal while being grown in a virtual world (virtual space). For example, the player ventures in virtual space through the main character, battles with an enemy character with whom the player meets on a field or at a dungeon or so to improve the experience point and the capability point of the main character. Then, the player tries to solve a problem with a greater difficulty according to the growth of the main character while collecting items needed and reading a riddle or the like. As the solution of the problem progresses, the identity of the enemy boss character to be a final goal becomes apparent, so that the player beats the enemy boss character to end the adventure.

In such a role playing game, a cave, a palace or the like is generally expressed as a dungeon (maze or the like). In the dungeon, the player often meets an enemy character or can acquire a more important item or the like. Accordingly, the player conquers the dungeon to quicken the growth of the main character or acquires an important item to progress the solution of the problem.
Although a type which displays a predetermined map (fixed map with fixed arrangement of a path and various kinds of objects) of such dungeon was typical, a game of a type which automatically creates different maps (random maps) becomes known recently.

As one example of this type of game, the technology of a video game device capable of creating a maze with a complicated shape is disclosed (e.g., see Patent Document 1).
Patent Document 1: Unexamined Japanese Patent Application KOKAI Publication No. 2001-96067 (pp. 6-10, FIG. 2)

### Disclosure of Invention

### Problems to be solved by the invention

While the aforementioned role playing game is originally displayed two-dimensionally (displayed on a plane), three-dimensional display (stereoscopic display) has been introduced recently. That is, a display with a three-dimensional map is demanded even in a dungeon or the like.
However, generation of such three-dimensional map involves an increased processing load in the image generation, as compared to the conventional map (two-dimensional map), upon automatic generation of such three dimensional map and causes a problem as explained in the following.

In the automatic generation of three-dimensional map, firstly, the generation of a three-dimensional image is performed by randomly selecting a plurality of parts from more-complex three-dimensional parts; in this time, there is a fear that a certain combination of the selected parts causes a processing load to exceed an allowable value. For example, an image will be displayed in an incomplete state (incomplete rendering) and a delay in the displaying till next frame (jumpiness) will be caused when the selected 5 combination of parts results an excess against the processing capability (rendering capacity). In other words, a random selection of complex three-dimensional parts might cause failure to perform appropriate displaying.
On that account, there has been a necessity of preparing a simple three-dimensional part such that the processing load becomes as small as possible, for avoiding incomplete rendering and jumpiness. Still, in this case, a generated three-dimensional map is little different from the conventional two-dimensional maps and fails to enhance reality and presence.

Further, in such automatic generation of the three-dimensional map, there is a problem of incapability to incorporate the intention of creators into the three-dimensional image to be generated. In other words, it is such that a given part is selected randomly; therefore it has been impossible to generate three-dimensional images in alignment with the development or the like of the game and such a three-dimensional image as with a sharp contrast, aimed at visual effect and performance.

The present invention is created for solving these problems, and an object of the present invention is to provide an image generation device, an automatic generation method, a recording medium and a program, which are capable of automatically generating appropriate three-dimensional images.

### Means for solving the problem

An image generation device according to a first aspect of the present invention comprises a parts storage unit, a parts selection unit and an image rendering unit and is structured as follows.

Firstly, a parts storage unit stores a plurality of parts to be elements of a three-dimensional image (e.g., a three-dimensional parts image) individually together with indicator information which indicate work loads in generating the parts (e.g., the size of memory to be used, rendering cost and a CPU cost).
And, a parts selection unit selects parts in any combination such that a total of 5 the work loads is within a range not exceeding a predetermined allowable value, based on the stored indicator information. Then, an image rendering unit that renders a three-dimensional image, based on the combination of each of the selected parts.
In this way, the total of the work loads of the selected parts is in a range not exceeding an allowable value, a three-dimensional image is generated without causing insufficient rendering and jumpiness.
As a result of this, an appropriate three-dimensional image is automatically generated.

An image generation device according to a second aspect of the present invention comprises a parts storage unit, an outline information storage unit, a preceding parts selection unit, a parts selection unit and an image rendering unit, and is configured as follows.

Firstly, the parts storage unit stores a plurality of parts to be elements of a three-dimensional image (e.g., a three-dimensional parts image) with parameter information defined for the parts each. Then, an outline information storage unit stores outline information defining a policy in generation of the three-dimensional image.
On the other hand, a preceding parts selection unit selects, with precedence, a part in alignment with the stored outline information, based on the stored parameter information (e.g. the visual complexity and the formal complexity). Then, a parts selection unit selects an other part in such a combination that a total of the work loads is within a range not exceeding a predetermined allowable value, based on the stored parameter information (e.g. the size of memory to be used, rendering cost and a CPU cost). Then, an image rendering unit renders the three-dimensional image based on all the parts selected in combination.
In this way, by the parts selected in line with the outline information, a three-dimensional image incorporating an intention of creators is generated. Further, since the total of the loads of the selected parts is within a range not exceeding an 5 allowable value, a three-dimensional image is generated without incomplete rendering and jumpiness.
As a result of this, an appropriate three-dimensional image can automatically be generated.

The image generation device may further comprise a work load calculation unit for calculating a work load on the rendering of a part, based on information stored together with the parts, and
The parts selection unit may select parts in a random combination such that a total of the work loads is within a range not exceeding an allowable value, with making the work load calculation unit calculate the work load of the selected parts.

An automatic generation method according to a third aspect of the present invention is an automatic generation method using a parts storage unit (storing a plurality of parts to be elements of a three-dimensional image, together with individual indicator information that indicate work loads in generating the parts, a parts selection step, a image rendering step and is configured as in the following.

Firstly, in the parts selection step, parts in any combination such that the total of the work loads is within a range not exceeding a predetermined allowable value, is selected based on the stored indicator information (e.g. the size of memory to be used, rendering cost and a CPU cost). Then, in the image rendering step, a three-dimensional image is rendered based on all the parts selected in combination.
In this way, the total of the work loads of the selected parts is within such a range not exceeding the allowable value, and therefore a three-dimensional image can be generated without causing incomplete rendering and jumpiness.
As a result of this, an appropriate three-dimensional image can automatically be generated.

An automatic generation method according to a fourth aspect of the present invention is an automatic generation method using a parts storage unit (storing a plurality of parts to be elements of a three-dimensional image together with parameter information defined for the parts each) and an outline information storage unit (storing outline information defining a policy in generating a three-dimensional image), comprises a preceding parts selection step, a parts selection step and an image rendering step, and is configured as follows.

Firstly, in the preceding parts selection step, a part in alignment with the stored outline information, is selected with precedence, based on the stored parameter information (e.g., visual complexity and formal complexity). Further, in the parts selection step, an other part is selected in such a combination that the total of the work loads is within a range not exceeding a predetermined allowable value, based on the stored parameter information (e.g. the size of memory to be used, rendering cost and a CPU cost). Then, in the image rendering step, a three-dimensional image is rendered based on the combination of each of the selected parts.
In this way, a three-dimensional image in which the intention of the creators is incorporated is generated by the parts selected along the outline information.
Further, the total of the work loads of the selected parts is within a range not exceeding an allowable value, therefore a three-dimensional image is generated without causing incomplete rendering or jumpiness.
As a result, an appropriate three-dimensional image can be generated automatically.

A program according to a fifth aspect of the present invention is configured to cause a computer (game apparatus) to serve as the above-described image generation device.

This program can be recorded in a computer-readable information recording medium (recording medium) including a compact disk, a flexible disk, a hard disk, a magneto-optical disk, a digital video disk, a magnetic tape and a semiconductor memory.

The above-described program can be distributed or sold via a computer communication network, being independent from a computer in which the program is executed. Further, the above-mentioned information recording medium can be distributed or sold, being independent from the computer.

### Effect of the invention

According to the present invention, an appropriate three-dimensional image can automatically be generated.

### Brief Description of Drawings

[FIG. 1] A schematic diagram of general configuration of a typical game apparatus by which an image generation device according to an embodiment of the present invention is realized.
[FIG. 2] A schematic diagram of a general configuration of the image generation device of an embodiment of the present invention.
[FIG. 3A] A schematic diagram of an example of parts images stored in a parts storage unit.
[FIG. 3B] A schematic diagram of an example of parameter information stored in a parts storage unit.
[FIG. 4] A schematic diagram showing one example of the three-dimensional image to be generated.
[FIG. 5] A flowchart showing a flow of an automatic generation process executed by the image generation device.
[FIG. 6 A] A schematic diagram showing one example of a three-dimensional image generated from parts image selected with a high precedence.
[FIG. 6 B] A schematic diagram showing one example of three-dimensional image generated from all the selected parts.

### [Explanation of Reference Numerals]

- 100: game apparatus
- 101: CPU
- 102: ROM
- 103: RAM
- 104: interface
- 105: controller
- 106: external memory
- 107: DVD-ROM DRIVE
- 108: image processor
- 109: sound processor
- 110: NIC
- 200: image generation device
- 201: parts storage unit
- 202: outline information storage unit
- 203: parts selection unit
- 204: processing load calculation unit
- 205: map storage unit
- 206: image rendering unit

### Best Mode for Carrying Out the Invention

An embodiment of the present invention will be described below. While the following describes an embodiment in which the invention is adapted to a game device for the ease of understanding, the invention can also be adapted to information processing apparatuses, such as various computers, PDA and cellular phone. That is, the embodiment to be described below is given by way of illustration only, and does not limit the scope of the invention. Therefore, those skilled in the art can employ embodiments in which the individual elements or all the elements are replaced with equivalent ones, and which are also encompassed in the scope of the invention.

### (First embodiment)

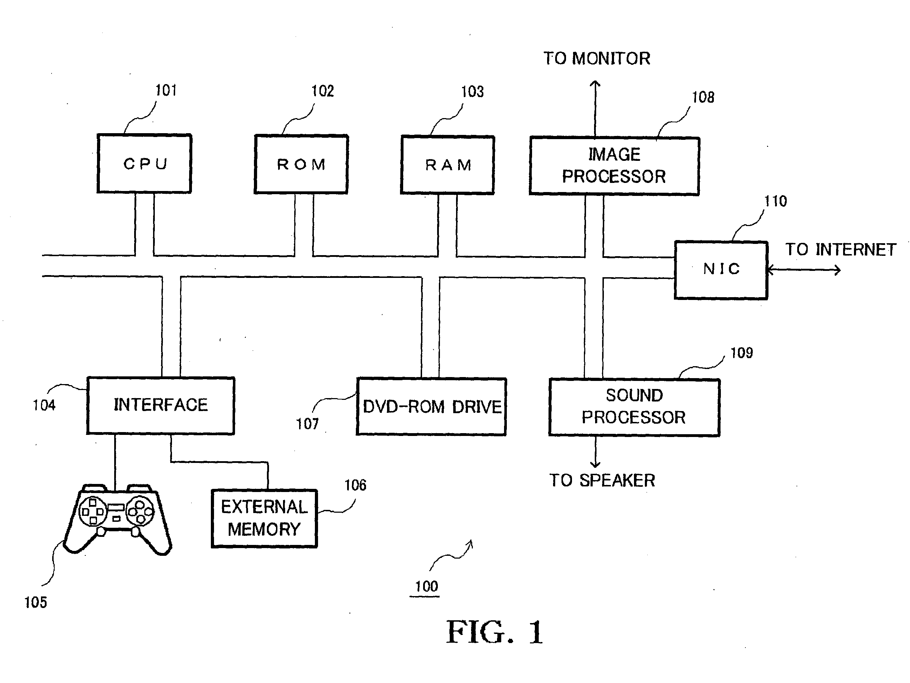

FIG. 1 is an exemplary diagram illustrating the schematic configuration of a typical game device which realizes an image creating device according to the embodiment of the present invention. The following description will be given referring to the diagram.

A game device 100 has a CPU (Central Processing Unit) 101, a ROM (Read Only Memory) 102, a RAM (Random Access Memory) 103, an interface 104, a controller 105, an external memory 106, a DVD (Digital Versatile Disk)-ROM drive 107, an image processor 108, a sound processor 109, an NIC (Network Interface Card) 110.

As a DVD-ROM storing a program and data for a game is loaded into the DVD-ROM drive 107 and the game device 100 is powered on, the program is executed to realize the image creating device of the embodiment.

The CPU 101 controls the general operation of the game device 100, and is connected to individual components to exchange a control signal and data therewith.

An IPL (Initial Program Loader) which is executed immediately after power-on is recorded in the ROM 102. As the IPL is executed, the program recorded in the DVD-ROM is read into the RAM 103 and is executed by the CPU 101. Recorded in the ROM 102 are a program for the operating system needed for the general operational control of the game device 100 and various kinds of data.

The RAM 103 temporarily stores data and a program. The program and data read from the DVD-ROM, and other data needed for progressing a game and chat communication is held in the RAM 103.

The controller 105 connected via the interface 104 accepts an operation input which is made when a user executes the game. For example, the controller 105 accepts an input, such as a string of characters (message), according to the operation input.

Data indicative of the progress status of the game, data of the log (record) of the chat communication and the like are stored in a rewritable manner in the external memory 106 connected detachably via the interface 104. As the user makes an instruction input via the controller 105, those data can adequately be recorded in the external memory 106.

The program for realizing the game and image data and sound data accompanying the game are recorded in the DVD-ROM to be loaded into the DVD-ROM drive 107. Under the control of the CPU 101, the DVD-ROM drive 107 performs a process of reading from the DVD-ROM loaded therein to read a necessary program and data which are temporarily stored in the RAM 103 or the like.

The image processor 108 processes data read from the DVD-ROM by means of the CPU 101 and an image operation processor (not shown) the image processor 108 has, and then records the data in a frame memory (not shown) in the image processor 108. The image information recorded in the frame memory is converted to a video signal at a predetermined synchronous timing, which is in turn output to a monitor (not shown) connected to the image processor 108. This can ensure various image displays.

The image operation processor can enable fast execution of an overlay operation of a two-dimensional image, a transparent operation like α blending, and various kinds of saturate calculations.
It is also possible to enable fast execution of an operation of rendering polygon information which is arranged in virtual three-dimensional space and to which various kinds of texture information is added, by a Z buffer scheme to acquire an rendered image with a downward view of a polygon, arranged in the virtual three-dimensional space, from a predetermined view point position.

Further, as the CPU 101 and the image operation processor cooperate to be able to write a string of characters as a two-dimensional image in the frame memory or on each polygon surface according to font information which defines the shapes of characters. While the font information is recorded in the ROM 102, exclusive font information recorded in the DVD-ROM can be used as well.

The sound processor 109 converts sound data read from the DVD-ROM to an analog sound signal, and outputs the sound signal from a speaker (not shown) connected to the sound processor 109. Under the control of the CPU 101, the sound processor 109 generates effect sounds and music data to be generated during progress of the game, and outputs sounds corresponding thereto from the speaker.

The NIC 110 serves to connect the game device 100 to a computer communication network (not shown), such as the Internet. The NIC 110 includes an analog modem according to the 10 BASE-T/100 BASE-T standard which is used at the time of constructing a LAN (Local Area Network) or to be connected to the Internet using a telephone circuit, an ISDN (Integrated Services Digital Network) modem, an ADSL (Asymmetric Digital Subscriber Line) modem, a cable model to connect to the Internet using a cable television circuit, or the like, and an interface (not shown) which mediates between those modems and the CPU 101.

In addition, the game device 100 may be configured so as to achieve the same functions as the ROM 102, the RAM 103, the external memory 106, and the DVD-ROM or the like which is to be loaded into the DVD-ROM drive 107 by using a large-capacity external storage device, such as a hard disk.
It is also possible to employ a mode of connecting to a keyboard for receiving an edition input of a character string from the user, a mouse or the like for receiving designation of various positions and a selective input therefrom.

An ordinary computer (general-purpose personal computer or the like) can be used as the image creating device in place of the game device 100 of the embodiment. For example, the ordinary computer, like the game device 100, has a CPU, a RAM, a ROM, DVD-ROM drive and NIC, has an image processor having simpler functions than the game device 100, and can use a flexible disk, magnetooptical disk, a magnetic tape or the like in addition to a hard disk as an external storage device. The keyboard, mouse or the like, not a controller, is used as an input device. As the game program is executed after installation thereof, the computer serves as the image creating device.

### (Schematic configuration of the image generation device)

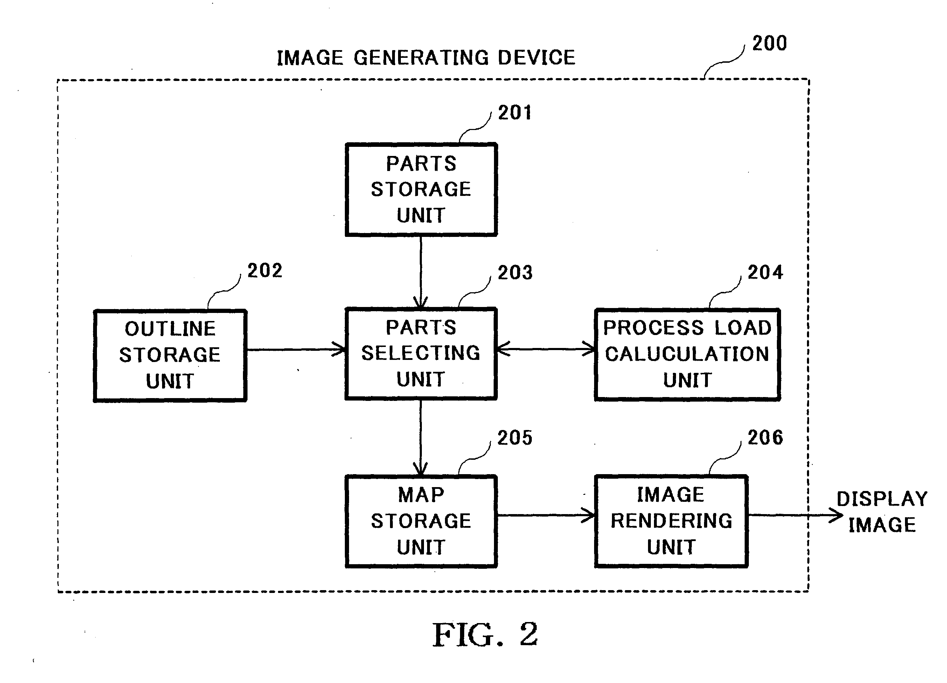

FIG. 2 is an exemplary diagram showing a schematic configuration of an image generation device according to the present embodiment. Hereafter the description is provided with reference to this figure.

The image generation device 200 comprises a parts storage unit 201, an outline information storage unit 202, a parts selection unit 203, a processing load calculation unit 204, a map storage unit 205 and an image rendering unit 206.

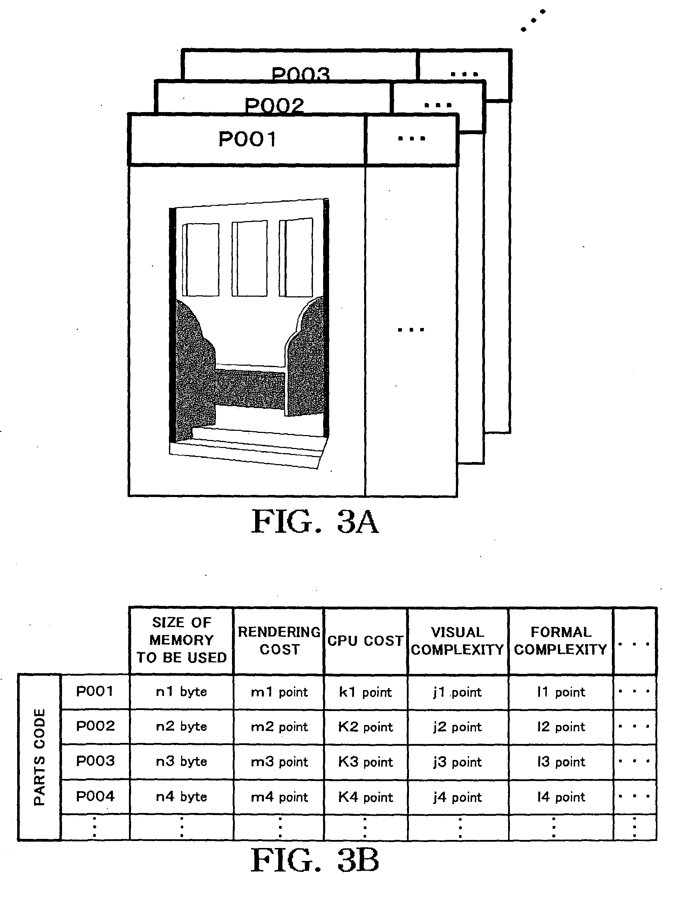

Firstly, the parts storage unit 201 stores a plurality of parts image that can constitute a three-dimensional virtual image (a three-dimensional map) and parameter information of each parts image.
For example, the parts storage unit 201 stores a small three-dimensional image (parts image) of a predetermined unit, such as shown in FIG. 3A and various parameter information specified for each parts image, such as shown in FIG. 3B.

The parts image shown in FIG. 3A is managed based on, for example, parts codes (parts IDs, etc.) and selected at random by the later-described parts selection unit 203, and can be an element of a three-dimensional map to automatically be generated.
Further, the parameter information shown in FIG. 3B includes, as one example, memory size to be used, rendering cost and CPU cost, a processing load (resource consumption or the like) on the later-described rendering of each of parts image performed by the image rendering unit 206. Abstract values are plotted in the table, but actually these values are specifically calculated by a predetermined measurement method or an arithmetic method. Then, the parameter information exemplified by these memory size to be used, etc. are referred to as a reference on the calculation of processing load performed by the later-described processing load calculation unit 204.
In addition to this, the parameter information shown in FIG. 3B includes visual complexity and formal complexity. Visual complexity represents in what degree the parts image is visually cumbersome (whether the simple feeling is caused or annoying feeling is caused, etc.), and on the other hand, the formal complexity represents the complexity in the shape of the parts image. The parameter information including the visual complexity, etc. is referred to by the parts selection unit 203 for achieving alignment with the later-described outline information stored in the outline information storage unit 202.
A DVD-ROM mounted on the DVD-ROM DRIVE 107 and an external memory 106 can serve as the parts storage unit 201 like this.

Referring back to FIG. 2, the outline information storage unit 202 stores outline information for reflecting the intention of the creators to the automatic generation of the three-dimensional virtual image. In other words, the outline information storage unit 202 stores outline information providing general policy on the automatic generation of the three-dimensional map.
There is a case, for example, where creators intend a three-dimensional virtual image with high contrast or variations in the arrangement of geographic features or the like for visual effect and performance. In this case, outline information defining general policy is stored to the outline information storage unit 202 in advance. This outline information is read out by the parts selection unit 203 and, in order to be in alignment with the intention of the creators, the parameter information (the above-described visual complexity, and formal complexity) is referred to, and a targeted parts image is selected with precedence on the automatic generation of the three-dimensional map.
A DVD-ROM mounted on a DVD-ROM DRIVE 107 and an external memory 106 can function as an outline information storage unit 202 as described above.

The parts selection unit 203 optionally selects parts image stored in the parts storage unit 201 and selects a combination of parts image to be an element of the three-dimensional virtual image. In this selection, the parts selection unit 203 selects a parts image at random, in view of outline information stored in the above-described outline information storage unit 202 and the state of computing performed by the later-described processing load calculation unit 204.
For example, the parts selection unit 203 reads out outline information stored in the outline information storage unit 202, and selects from the parts images a predetermined number of parts images. In other words, parameter information (visual complexity, etc.) of the parts images is referred to and a parts image being along the line with a policy is selected with precedence.
Then, the parts selection unit 203 selects remaining parts images within the range in which the processing load does not exceed an allowable value. In other words, the processing load of each parts image selected in advance with precedence is calculated at the processing load calculation unit 204, and then the remaining parts images are selected within a range in which the total processing load does not exceed the allowable value, with the processing load of the successively selected parts image being calculated by the processing load calculation unit 204. In the case where, in the progress, the processing load exceeds an allowable value, the parts selection unit 203 optionally deselects a parts image of a high processing load (except for parts images selected with precedence) and performs reselection, to thereby controls the total processing load so as not to exceed the allowable value.
The parts selection unit 203 stores thus selected parts images to a map storage unit 205.
The CPU 10 1 can serve as a parts selection unit 203 as described above.

The processing load calculation unit 204 refers to parts information (a memory size to be used, a rendering cost and a CPU cost, etc.) stored in the parts storage unit 201, and calculates the processing load of each of parts images selected by the parts selection unit 203. In other words, calculated in advance is the processing load required, for the image rendering unit 206 to render three-dimensional images composed of each parts.
The CPU101 can serve as the processing load calculation unit 204 as described above.

The map storage unit 205 stores arrangement (alignment) of parts images which are to be elements of a three-dimensional image. That is, in the map storage unit 205, each parts image selected by the parts selection unit 203 is disposed suitably.
The RAM 103 can serve as the map storage unit 205 as described above.

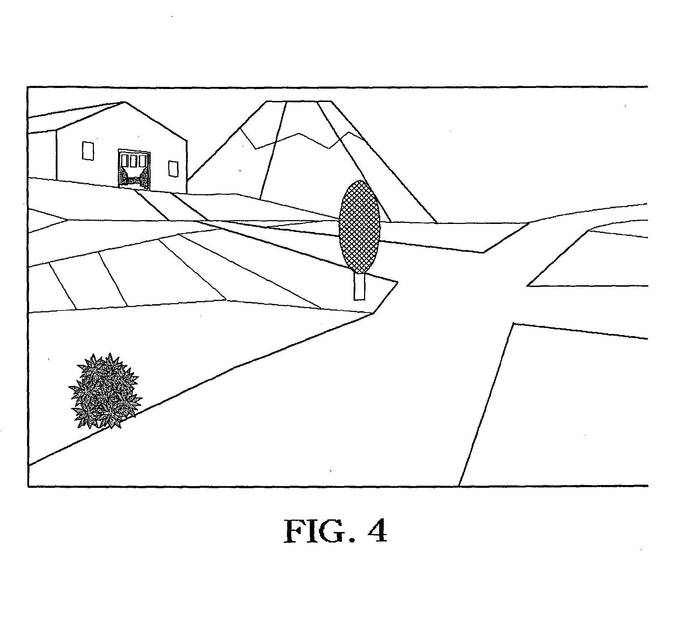

The image rendering unit 206 generates a three-dimensional image based on each parts image stored in the map storage unit 205.
For example, the image rendering unit 206 selects a field of view in accordance with predetermined view point information and generates a three-dimensional image as shown in FIG. 4 from each parts image to be displayed stored in the map storage unit 205.
This three-dimensional image incorporates the intention of creators such that the geographies are arranged plainly in the east side and, contrarily, in the west side the geographies are arranged to provide complex texture, along the line with the outline information stored in the outline information storage unit 202. Further, the sum of the processing loads of the parts images each stored in the map storage unit 205 is within a range that does not exceeds the allowable value. Thus the generation is without incomplete rendering or jumpiness.
The image processor 108 can serve as the image rendering unit 206 as described above.

### (General Outline of Operation of Image Generation Device)

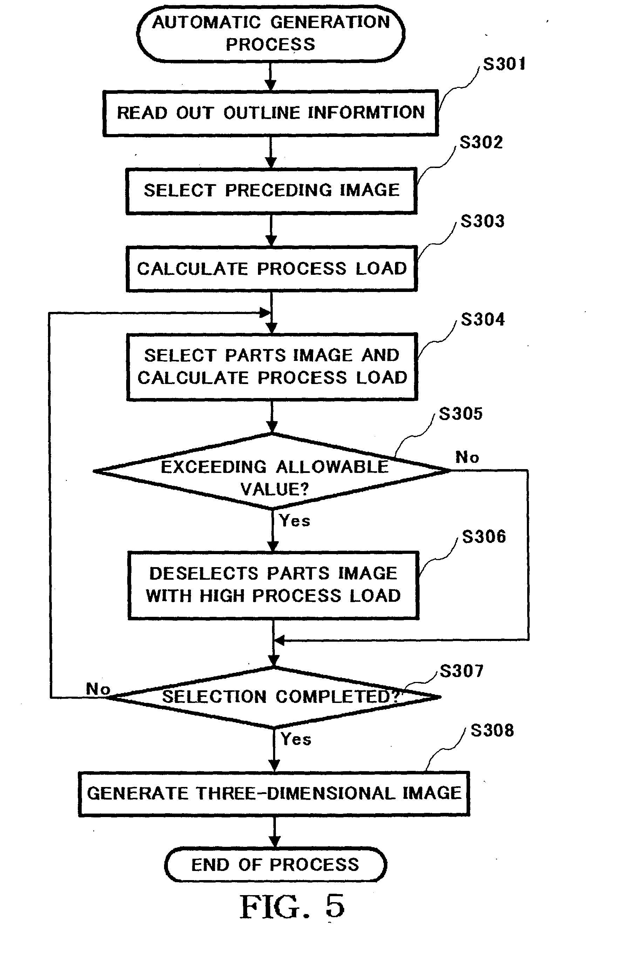

FIG. 5 is a flowchart showing a flow of an automatic generation process executed in the image generation device 200. An explanation will be given in the following with reference to the drawings. This automatic generation process is started in response to, for example, switching of scenes in a role-playing game (e.g., at a time of going-into a dungeon).

Firstly, the parts selection unit 203 reads out outline information from the outline information storage unit 202 (step S301). That is, the parts selection unit 203 reads out outline information providing general policy in order that the intention of creators are incorporated.

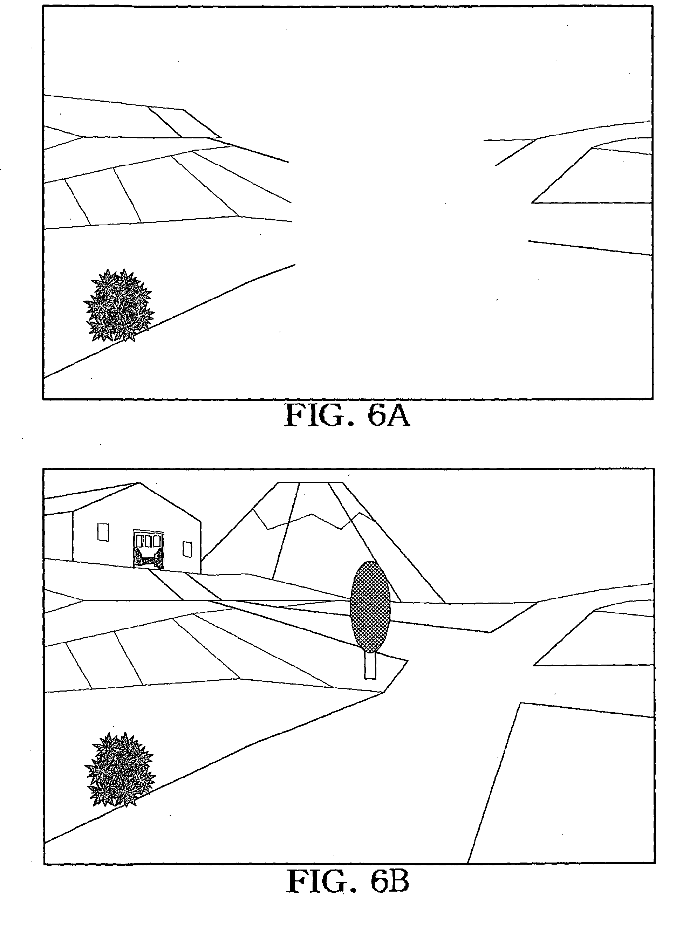

The parts selection unit 203, based on the read-out outline information, selects a parts image with precedence from the targeted parts images (step S302). The parts selection unit 203 refers to the parameter information (visual complexity, etc.) of the parts image and selects a parts image in alignment with the general policy provided in the outline information.
For example, when the outline information provides a general policy such that in the east side the geographies are arranged plainly and in the west side contrarily the geographies are arranged to provide complex texture, the parts selection unit 203 randomly selects a predetermined number of parts image of those having low visual complexity and arranges it in the east side (stores it to the map storage unit 205), and randomly selects a predetermined number of parts image of those having high visual complexity, etc., and arranges them in the west side.
That is, as shown in FIG. 6 A, the parts images along the line with the general policy provided by the outline information are selected and stored to the map storage unit 205. For a simple explanation, FIG. 6 A shows one example of three-dimensional image in the case where the generation is based on the parts image stored in the map storage unit 205.

The processing load calculation unit 204 calculates a processing load of each parts image selected with precedence (step S303). That is, the processing load calculation unit 204 calculates the processing load of each parts image selected in alignment with the outline information.
In a case where the summed processing load exceeds a predetermined ration 5 of an allowable value (for example, 50%, etc.), the process may again go back to step S302 and parts images with precedence may be reselected.

The parts selection unit 203 selects parts images and makes a processing load calculation unit 204 calculate processing loads of the selected parts images (step S304). The selected parts image is stored to the map storage unit 205, where necessary.
Then, the parts selection unit 203 determines whether the total processing load is in excess of the allowable value (step S305).

The parts selection unit 203, when determining that the total processing load is not in excess of the allowable value (step S305;No), proceeds the process to a later-described step S307.
On the other hand, when it is determined that the processing load is in excess of the allowable value (step S305;Yes), the parts selection unit 203 deselects a parts image having a high processing load (step S306). In other words, the parts selection unit 203 deletes a parts image having a high processing load from the parts images selected and stored to the map storage unit 205. In this time, the parts selection unit 203 deselects a single or a plurality of parts images in accordance with the remaining number in need of selection (the remaining number of the parts images), where necessary.
The parts images selected with precedence is omitted from the deselecting target. That is, the parts images with high processing loads are deselected from the parts images selected in the above-described step S304.

The parts selection unit 203 determines whether the selection of all parts images is completed (step S307).
When the parts selection unit 203 determines that the selection of the parts image has not been completed (step S307;No), gets the process back to step S304, and repeatedly executes the above-described processes of steps S304-S307.

On the other hand, when it is determined that the selection of the parts images is all completed, (step S307;Yes), the image rendering unit 206 generates a three-dimensional image based on each parts image stored in the map storage unit 205 (step S308).
For example, the image rendering unit 206 generates a three-dimensional image as shown in FIG. 6 B from each parts image stored in the map storage unit 205.
This three-dimensional image shown in FIG. 6 B, is generated such that, with the parts images of FIG. 6 A selected with precedence along the line with the outline information, the remaining parts image is selected. Then, the remaining parts image is selected optionally within the range in which the total processing load is not in excess of the allowable value.
Therefore, the generated three-dimensional image shown in FIG. 6 B incorporates the intention of the creators and are generated without incomplete rendering and jumpiness.

Accordingly, by the above-described automatic generation process, the intention of the creators is incorporated and a three-dimensional image is automatically generated without incomplete rendering or jumpiness.
Resultantly, an appropriate three-dimensional image can automatically be generated.

### (Another embodiment)

In the above embodiment the explanations are provided of the case where each parts image is selected at random, with the processing load of the parts image being calculated in the processing load calculation unit 204 so that the total processing load is within a range not in excess of the allowable value.
However, the way of selecting parts images so that the total processing load is in a range not in excess of an allowable value is not limited to the above and may be implemented relying upon another method.
For example, the selection of parts images may be by a linear programming method or a quadratic programming, within a range under constraint (the allowable value of the processing load).

Further, the above embodiment has described a case where a memory size to be used, parameter information, a rendering cost and a CPU cost are stored as indicator information, and the processing load of the parts images are calculated by these information. However, the memory size, etc. is one example of information to be stored as indicator information and the indicator information is not limited to this information. That is, other information may be used as long as the processing load on the generation of image can be calculated.

In the above embodiment the explanation has been give of a case where the visual complexity and formal complexity are stored as the parameter information, and parts images in alignment with the outline information is selected with precedence based on the information. However, the information is only example, and information showing digitized criteria in alignment with the outline information may be applied.
For example, if the information is such as showing the hardness of an (assumed) material and the spectrum of color, a three-dimensional image incorporating the intention of the creator side can be generated such that a geography of hard texture is arranged in the north side, and a geography of red spectrum in the south side.

That is, an appropriate three-dimensional image can be generated automatically also in these cases.

Further, in the above embodiment, the explanation has been given of the case where the allowable value of the processing load is predetermined, but, the invention is applicable optionally to a case where the allowable value of the processing load, which can be assigned to image generation, is variable dependent on another processing in relevance.

For the present application a priority is claimed on the basis of the Japanese Patent Application No. 2005-017223 and the entity of the application is incorporated herein by the reference.

### Industrial Applicability

As described in the above, according to the present invention, an image generation device, an automatic generation method, a recording medium and a program each being preferable for generation of an appropriate three-dimensional image can be provided.

## Claims

1. An image generation device **characterized by** comprising:
a parts storage unit that stores a plurality of parts to be elements of a three-dimensional image individually together with indicator information which indicate work loads in generating the parts;
a parts selection unit that selects parts in any combination such that a total of the work loads is within a range not exceeding a predetermined allowable value, based on the stored indicator information; and
an image rendering unit that renders a three-dimensional image, based on the combination of each of the selected parts.

2. An image generation device **characterized by** comprising:
a parts storage unit that stores a plurality of parts to be elements of a three-dimensional image individually together with parameter information defined for the parts each;
an outline information storage unit that stores outline information defining a policy in generation of the three-dimensional image;
a preceding parts selection unit that selects, with precedence, a part in alignment with the stored outline information, based on the stored parameter information;
a parts selection unit that selects an other part in such a combination that a total of the work loads is within a range not exceeding a predetermined allowable value, based on the stored parameter information; and
an image rendering unit that renders the three-dimensional image based on all the parts selected in combination.

3. The image generation device according to claim 1 or 2, further comprising a work load calculation unit for calculating a work load on the rendering of a part, based on information stored together with the parts, wherein
said parts selection unit selects parts in a random combination such that a total of the work loads is within a range not exceeding an allowable value, with making the work load calculation unit calculate the work load of the selected parts.

4. An automatic generation method using a parts storage unit, said parts storage unit storing a plurality of parts to be elements of a three-dimensional image, together with individual indicator information that indicate work loads in generating the individual parts, said method comprising the steps of:
a parts selection step of selecting parts in any combination such that the total of the work loads is within a range not exceeding a predetermined allowable value, based on the stored indicator information; and
an image rendering step of rendering a three-dimensional image, based on the combination of each of the selected parts.

5. An automatic generation method using a parts storage unit and an outline information storage unit, wherein said parts storage unit stores a plurality of parts to be elements of a three-dimensional image together with parameter information, and said outline information storage unit stores outline information defining a policy in generating a three-dimensional image, the method comprising:
a preceding parts selection step of selecting, with precedence, a part in alignment with the stored outline information, based on the stored parameter information,
a parts selection step of selecting an other part in such a combination that the total of the work loads is within a range not exceeding a predetermined allowable value, based on the stored indicator information; and
an image rendering step of rendering a three-dimensional image, based on the combination of each of the selected parts.

6. A recording medium having a program recorded thereon to cause a computer to serve as:
a parts storage unit that stores a plurality of parts to be elements of a three-dimensional image, individually together with indicator information that indicate work loads in generating the parts each;
a parts selection unit that selects parts in any combination such that the total of the work loads is within a range not exceeding a predetermined allowable value, based on the stored indicator information; and
an image rendering unit that renders a three-dimensional image, based on the combination of each of the parts.

7. A recording medium having a program recorded thereon to cause a computer to serve as:
a parts storage unit that stores a plurality of parts to be elements of a three-dimensional image, together with parameter information defined for the parts each;
an outline information storage unit that stores outline information defining a policy in the generation of the three-dimensional image;
a preceding parts selection unit that selects a part in alignment with the stored outline information, based on the stored parameter information;
a parts selection unit that selects parts in any combination such that a total work load is within a range not exceeding a predetermined allowable value, based on the stored parameter information; and
an image rendering unit that renders the three-dimensional image based on all the parts selected in combination.

8. A program for causing a computer to serve as:
a parts storage unit that stores a plurality of parts to be elements of a three-dimensional image individually together with indicator information defined for the parts each;
a parts selection unit that selects parts in any combination such that the total of the work loads is within a range not exceeding a predetermined allowable value, based on the stored indicator information; and
an image rendering unit that renders a three-dimensional image, based on the combination of each of the parts.

9. A program for causing a computer to serve as:
a parts storage unit for storing a plurality of parts to be elements of a three-dimensional image, together with parameter information defined for the parts each;
an outline information storage unit that stores outline information defining a policy in generation of the three-dimensional image;
a preceding parts selection unit that selects, with precedence, a part in alignment with the stored outline information, based on the stored parameter information;
a parts selection unit for selecting an other part in such a combination that the total of the work loads is within a range not exceeding a predetermined allowable value, based on the stored parameter information; and
an image rendering unit that renders the three-dimensional image, based on all the parts selected in combination.
